# EUROPÄISCHE PATENTSCHRIFT

(11) **EP 2 868 431 B1**
(45) Veröffentlichungstag und Bekanntmachung des Hinweises auf die Patenterteilung: **13.09.2017**
(21) Anmeldenummer: 14189876.7
(22) Anmeldetag: 22.10.2014
(51) Int. Cl.: B23Q 35/28, B23Q 5/04, B23C 3/12, B27D 5/00

(54) **Aggregatverstellung**
Unit adjustment
Réglage d'agrégat

(30) Priorität: 30.10.2013 DE 102013222064
(43) Veröffentlichungstag der Anmeldung: 06.05.2015
(73) Patentinhaber: HOMAG GmbH, 72296 Schopfloch (DE)
(72) Erfinder: Calmbach, Martin, 72160 Horb-Dießen (DE); Martinetz, Jörg, 72280 Dornstetten (DE); Reich, Klaus, 72290 Loßburg (DE)
(74) Vertreter: Hoffmann Eitle

(56) Entgegenhaltungen:
- EP-A1- 0 743 139
- EP-A1- 2 181 816
- EP-A1- 2 420 347
- EP-A2- 1 479 493
- EP-A2- 2 394 803
- EP-A2- 2 514 545
- DD-A- 34 868
- DE-A1- 19 605 156
- GB-A- 1 259 071
- JP-A- H0 929 574
- US-B1- 8 092 357

## Beschreibung

### 1. Technisches Gebiet

Die vorliegende Erfindung betrifft ein einwechselbares Werkzeugaggregat zur Bearbeitung von Werkstücken, insbesondere im Bereich der Möbel- und Bauelementeindustrie. Derartige Werkstücke bestehen bevorzugt aus Holz, Holzwerkstoffen, Kunststoff oder dergleichen.

### Stand der Technik

Es ist ein einwechselbares Werkzeug-Aggregat gemäß der EP 1 36385 A2 bekannt, das eine Verstellung des Winkels des Werkzeuges zur Spindelachse A und eine Schwenkbewegung des Werkzeugs um die Spindelachse A erlaubt. Das Aggregat weist hierzu einen koaxial zur Spindelachse A rotierbaren Trägerteil mit einer um eine Achse schwenkbaren Werkzeugaufnahme und einen mit dem Trägerteil oder mit einem Maschinenteil drehfest verbindbaren Verstellteil auf, wobei der Verstellteil über ein Getriebe mit der Werkzeugaufnahme verbunden ist und das Getriebe eine Relativbewegung zwischen den Teilen in eine Änderung der Winkellage der Werkzeugaufnahme bezüglich der Spindelachse übersetzt.

Die EP 1 985 396 B1 betrifft ein einwechselbares Werkzeugaggregat mit einer Werkzeugaufnahme, die in Bezug auf einen Grundkörper des Werkzeugaggregats um eine erste C-Achse drehend antreibbar ist, sowie ein bewegbar gelagertes Halteelement zum Halten von Bearbeitungswerkzeugen bzw. Werkzeugadaptern. Das Werkzeugaggregat umfasst einen ersten Druckfluidkanal, der mit einem Hohlraum der Werkzeugaufnahme in Verbindung steht und in dem Hohlraum in einen Anlagebereich mündet, in welchem ein Bearbeitungswerkzeug bzw. Werkzeugadapter im gespannten Zustand anliegt. Der Homag Holzbearbeitungssysteme GmbH 19. Februar 2016 Druckfluidkanal steht ferner mit der Schnittstelle des Werkzeugaggregats in Verbindung.

Gegenüber bekannten Werkzeugaggregaten werden fortlaufend neue Anforderungen gestellt.

Beispielsweise sollen beim Bearbeiten von Werkstücken für Fensterelemente horizontale Bohrungen in verschiedenen Abständen gebohrt werden. Entweder werden hierfür Werkzeugaggregate mit mehreren Bohrern in verschiedenen Abständen verwendet, oder die Bohrungen werden jeweils einzeln gesetzt.

Ferner bestehen Anforderungen nach weiteren Ausrichtmöglichkeiten der Werkzeuge oder Tastelemente in Bezug auf das Werkstück. Zwar bestehen hier bereits Lösungen, bei denen ein zusätzlicher elektrischer Motor am Werkzeugaggregat eine Verstellbewegung bedingt. Ein solcher zusätzlicher Motor erhöht jedoch das Gewicht des Aggregats, und erfordert darüber hinaus eine eigene Energieversorgung.

Bei Aggregaten, die Tastelemente in der Form eines Tastring verwenden, besteht die Anforderung, dass zum einen das Bearbeitungswerkzeug in das Aggregat eingewechselt werden kann, ohne mit dem Tastring zu kollidieren, und zum anderen der Tastring auf diesen spezifischen Fräser einstellbar ist. Als ein Dokument ist die DE 196 05 156 A1 bekannt, die eine Vorrichtung mit einem Positionierantrieb zeigt. Der Oberbegriff von Anspruch 1 basiert auf diesem Dokument. Die EP 0 743 139 A zeigt ein C-Achs-Drehmodul mit einem Sockelteil, der einen Antriebsmotor trägt, sowie eine Drehhülse. Im Bereich des Sockelteils 7 ist ein auf der Drehhülse 8 ausgewählter Zahnkranz 11 vorgesehen.

Weitere Schriften sind die GB 1 259 071 A, DD 34 868 A, EP 0 743 139 A sowie JP H09 29574 A.

### Gegenstand der Erfindung

Ziel der vorliegenden Erfindung ist es, ein Werkzeugaggregat mit einer zusätzlichen Funktionalität zu versehen, sodass Einstellarbeiten erleichtert und/oder neue Ausrichtmöglichkeiten für das Werkzeugaggregat entstehen.

Der Gegenstand des Anspruchs 1 stellt hierfür eine Lösung bereit. Weitere bevorzugte Ausführungsformen sind in den abhängigen Ansprüchen aufgeführt.

Kerngedanke der vorliegenden Erfindung ist es hierbei, das Aggregat selbst mit einer zusätzlichen Einstellmöglichkeit zu versehen, beispielsweise eine Aggregateachse bereitzustellen oder einen oder mehrere translatorische Freiheitsgrade zu definieren, so dass ein Element des Werkzeugaggregats über ein Getriebe in diesem zusätzlichen Freiheitsgrad bewegt werden kann.

Ein "Werkzeug"/"Bearbeitungswerkzeug" im Sinne dieser Anmeldung ist beispielsweise ein spanend oder spanlos arbeitendes Werkzeug, insbesondere Bohrer oder Fräser, Schneidmesser oder ähnliches, oder, falls das Werkzeugaggregat als ein Verleimaggregat ausgebildet ist, eine Andrückwalze oder Leimauftragswalze.

Für den Antrieb des Getriebemechanismus bestehen verschiedene Möglichkeiten:
Bevorzugt wird der Getriebemechanismus durch eine Drehung des Werkzeugaggregats unter Verwendung einer Arretierung um eine C-Achse der Spindeleinheit angetrieben.

Der Getriebemechanismus kann eine Kupplung umfassen, die insbesondere mittels einer über einen C-Achsbolzen bereitgestellten Druckluft, elektromagnetisch oder motorisch betätigt wird, um die Drehbewegung einer Hauptspindel der Spindeleinheit in die translatorische Bewegung des beweglichen Elements des Werkzeugaggregats zu übertragen. Die Drehbewegung der Hauptspindel kann auch dazu genutzt werden, in einer anderen Stellung der Kupplung ein Bearbeitungswerkzeug anzutreiben.

### Kurze Beschreibung der Zeichnungen

- Fig. 1: zeigt eine erste Ausführungsform der vorliegenden Erfindung
- Fig. 2: zeigt eine zweite Ausführungsform der vorliegenden Erfindung
- Fig. 3: zeigt eine dritte Ausführungsform der vorliegenden Erfindung
- Fig. 4: zeigt eine vierte Ausführungsform der vorliegenden Erfindung
- Fig. 5: zeigt eine fünfte Ausführungsform der vorliegenden Erfindung
- Fig. 6: zeigt eine erste Modifikation der fünften Ausführungsform der vorliegenden Erfindung
- Fig. 7: zeigt eine sechste Ausführungsform der vorliegenden Erfindung
- Fig. 8: zeigt eine erste Modifikation der sechsten Ausführungsform der vorliegenden Erfindung

### Detaillierte Beschreibung der bevorzugten Ausführungsformen

Nachfolgend werden verschiedene Ausführungsformen der vorliegenden Erfindung im Detail erläutert. Modifikationen einzelner Merkmale bestimmter Ausführungsformen können hierbei auch mit anderen Ausführungsformen kombiniert werden, um neue Ausgestaltungen bereitzustellen.

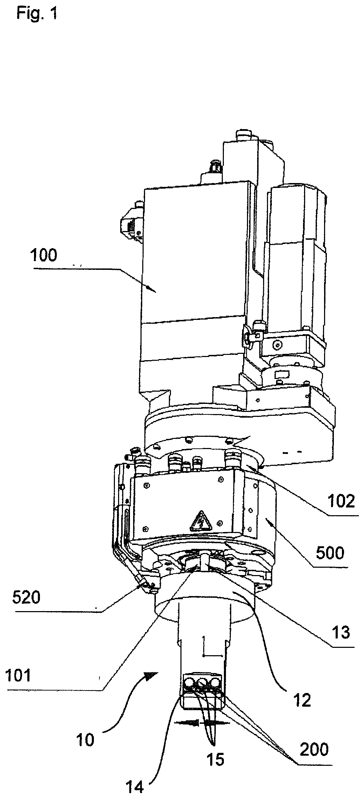

Fig. 1 ist eine perspektivische Ansicht eines einwechselbaren Werkzeugaggregats 10, das über ein sogenanntes Elektronikmodul 500 mit einer Frässpindel 100 verbunden werden kann. Mit dem Elektronikmodul 500 ist es hierbei möglich, das Werkzeugaggregat 10 mit elektrischer Energie zu versorgen. Die Anordnung ist jedoch auch ohne das Elektronikmodul 500 denkbar.

Im Bereich des unteren Abschnitts des Elektronikmoduls 500, das als modulare Einheit an der Frässpindel 100 befestigt ist, ist eine Aufnahme der Frässpindel 100 vorgesehen, in die die HSK-Aufnahme 101 des Werkzeugaggregats 10 eingewechselt werden kann.

Ferner umfasst die Frässpindel 100 in der vorliegenden Ausführungsform eine Arretierung 520 zur Arretierung eines äußeren Abschnitts des Gehäuses 12 des Werkzeugaggregats 10 bezüglich der Frässpindel 100. Die Arretierung kann auch am Maschinengestell oder einem Schlitten angebracht sein, der an einer Führungseinrichtung für die Frässpindel 100 angeordnet ist.

Im vorliegenden Ausführungsbeispiel wird das Werkzeugaggregat 10 beim Einwechseln in eine Aufnahme der Frässpindel über mindestens einen Achsbolzen 13 (ggf. auch drei Achsbolzen) mit einer Aufnahme der C-Achse 102 der Frässpindel 100 verbunden. Wie nachfolgend erläutert kann mittels des C-Achsbolzens 13 ein Drehmoment der Aggregatachse auf einen inneren Abschnitt des Werkzeugaggregats 10 übertragen werden.

Das Werkzeugaggregat 10 umfasst in der vorliegenden Ausführungsform drei Fräswerkzeuge 200, die im eingebauten Zustand des Werkzeugaggregats 10 in einer horizontalen Ebene angeordnet sind. Die Fräswerkzeuge 200 werden drehend betrieben, und der relative Abstand der jeweiligen Bearbeitungswerkzeuge zueinander kann wie nachfolgend erläutert verstellt werden.

Zur Verstellung des Abstandes der Fräswerkzeuge zueinander wird im Werkzeugaggregat 10 ein Getriebemechanismus verwendet, über den eine rotatorische Bewegung in eine translatorische Verstellbewegung mechanisch durchgeführt werden kann. Für den Antrieb des Getriebemechanismus bestehen verschiedene Möglichkeiten, die nachfolgend aufgeführt werden. Erfindungsgemäß umfasst das Werkzeugaggregat zumindest eine der nachfolgend erläuterten Mechanismen.

Zum einen kann der Getriebemechanismus über einen im Werkzeugaggregat 10 aufgenommenen Motor angetrieben werden, welcher beispielsweise mittels des Elektronikmoduls 500 mit Energie versorgt wird.

Die Verstellbewegung der Fräswerkzeuge 200 kann auch mittels eines Eingriffs der Arretierung 520 an einem äußeren Abschnitt des Gehäuses 12 des Werkzeugaggregats 10 durch eine Drehbewegung erreicht werden, welche Drehbewegung durch den C-Achsbolzen 13 auf einen inneren Gehäuseabschnitt des Werkzeugaggregats 10 übertragen wird. Somit dreht sich der innere Gehäuseabschnitt des Werkzeugaggregats relativ zum äußeren Gehäuseabschnitt.

Eine dritte Möglichkeit zum Antrieb des Getriebemechanismus ist über den Antrieb der Hauptspindel der Frässpindel 100 möglich, mit der eine Spindel des Werkzeugaggregats 10 drehend angetrieben wird. Im Werkzeugaggregat ist eine Kupplung vorgesehen, die beispielsweise druckluftgesteuert aktiviert wird. In der vorliegenden Ausführungsform wird die Druckluft über einen innerhalb des C-Achsbolzens 103 verlaufenden Kanal von der Frässpindel 100 oder der C-Achse in das Werkzeugaggregat 10 geleitet. Die genannte Kupplung kann auch als Rutschkupplung ausgeführt sein. Alternativ ist es auch möglich, die Kupplung motorisch zu betreiben, wobei die für den Antrieb des Motors erforderliche Energie beispielsweise über das Elektronikmodul 500 zur Verfügung gestellt wird.

Insgesamt werden somit drei unterschiedliche Möglichkeiten bereitgestellt, die zum Antrieb des Getriebemechanismus genutzt werden können. Jeweils eine dieser Alternativen kommt bei einem bestimmten Werkzeugaggregat zum Einsatz. Die genannten Alternativen zum Antrieb des Getriebes eines Werkzeugaggregats sind auch bei den später beschriebenen Ausführungsformen entsprechend umsetzbar.

Im Falle der zuletzt genannten Alternative ist das Werkzeugaggregat 10 mit einer Kupplung versehen, mit der eine Drehbewegung der Hauptspindel (HSK-Schnittstelle) entweder in eine Drehbewegung der Fräswerkzeuge 200 oder aber in eine Verstellbewegung umgeleitet wird. Somit kann ein Antrieb dazu genutzt werden, entweder einen Bearbeitungsvorgang durchzuführen oder eine Verstellbewegung vorzunehmen.

Wie zuvor bereits erwähnt umfasst das Werkzeugaggregat 10 eine HSK-Aufnahme 101, die in eine entsprechende Aufnahme der Frässpindel 100 aufgenommen wird. Ferner ist das Gehäuse 12 vorgesehen, an dem sich der mindestens eine C-Achsbolzen 13 parallel zur Ausrichtung der Spindel 11 erstreckt. An einer zur HSK-Aufnahme 101 gegenüberliegenden Seite des Gehäuses 12 ist eine Führung 14 vorgesehen, an der Werkzeugaufnahmen 15 translatorisch beweglich aufgenommen sind.

In die Werkzeugaufnahmen 15 sind in der vorliegenden Ausführungsformen im Wesentlichen gleiche Fräswerkzeuge 200 aufgenommen (siehe hierzu auch Fig. 1), um entsprechend große Bohrungen in bestimmten Abständen zueinander gleichzeitig einbringen zu können. Je nach Anforderung können jedoch auch unterschiedliche Fräswerkzeuge 200 in die Aufnahmen aufgenommen werden.

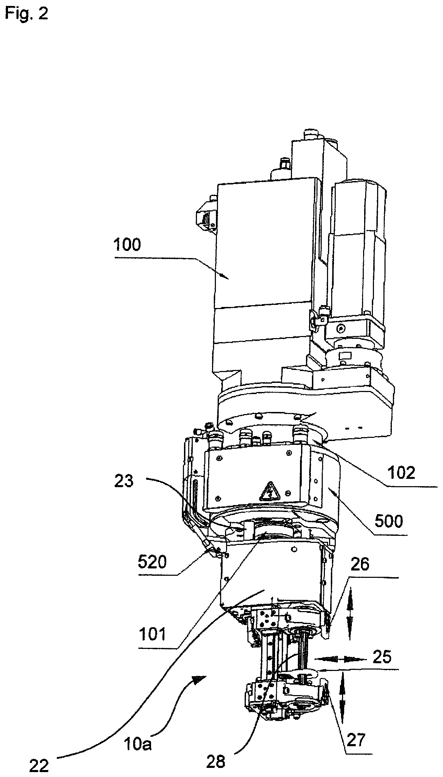

In Fig. 2 ist eine zweite Ausführungsform der vorliegenden Erfindung dargestellt, wobei die entsprechenden Elemente und Bauteile, in denen sich die erste und zweite Ausführungsform gleichen oder ähneln, mit entsprechenden Bezugszeichen versehen sind.

Insbesondere unterscheidet sich die zweite Ausführungsform von der ersten Ausführungsform mit Blick auf das Werkzeugaggregat 10a, das in der vorliegenden Ausführungsform ein horizontales Tastelement 25, ein oberes, vertikal verfahrbares Tastelement 26, sowie ein unteres, vertikal verfahrbares Tastelement 27 aufweist, die an einem Gehäuse 22 des Werkzeugaggregats 10a angebracht sind. Das horizontale Tastelement 25 weist eine längliche Öffnung auf, durch die sich die Arbeitsspindel 28 des Werkzeugaggregats 10a erstreckt. An der Arbeitsspindel 28 ist ein (nicht dargestelltes) Bearbeitungswerkzeug angebracht, mit dem insbesondere die Schmalseite eines plattenförmigen Werkstücks spanend bearbeitet werden kann.

Wiederum umfasst das Werkzeugaggregat 10a einen Getriebemechanismus, der es gestattet, alternativ die Tastelemente zu verfahren, oder aber das Bearbeitungswerkzeug zu betreiben. Somit kann eine durch die Hauptspindel bereitgestellte Drehbewegung entweder für eine Drehbewegung des Bearbeitungswerkzeugs oder aber eine der translatorischen Bewegungen der Tastelemente 25-27 genutzt werden.

Ein Umschalten zwischen einem Antrieb des Bearbeitungswerkzeuges einerseits und der Verstellbewegung der Tastelemente 25-27 wird beispielsweise durch eine zuvor genannte Kupplung bedingt. Alternativ kann eine Verstellung auch motorisch betrieben werden, oder unter Einsatz der Arretierung in Kombination mit einer Momentenübertragung über den bzw. die C-Achsbolzen 23..

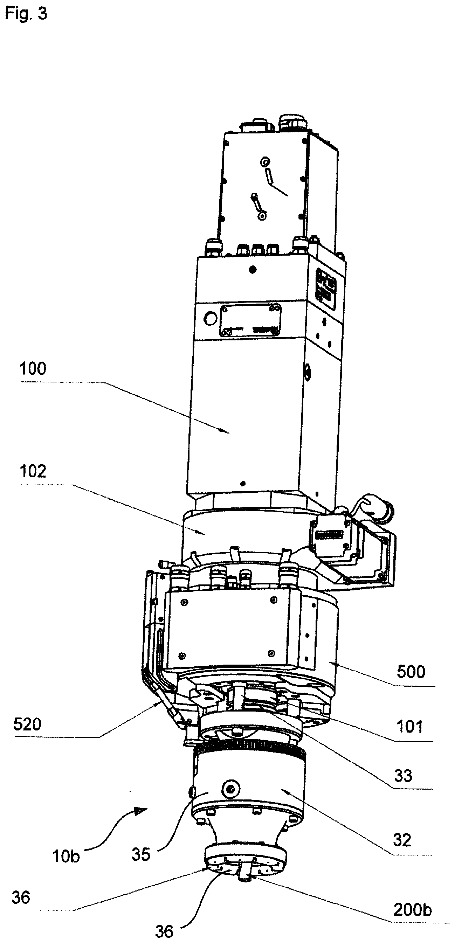

Fig. 3 zeigt eine weitere Ausführungsform der vorliegenden Erfindung, bei der ein Werkzeugaggregat 10b in die Aufnahme einer Frässpindel 100 eingewechselt ist.

Das Werkzeugaggregat 10b umfasst ein Gehäuse 32, an dem eine in einer translatorischen Richtung verstellbare Tastglocke 35 angebracht ist. Ausgehend vom Gehäuse 32 erstreckt sich in einer vertikalen Richtung ein C-Achsbolzen 33. Neben dem dargestellten C-Achsbolzen 33 können auch weitere Achsbolzen vorgesehen sein.

Innerhalb des Gehäuses 32 des Werkzeugaggregats 10b ist ein Getriebemechanismus vorgesehen, der beispielsweise eine Bewegung der Hauptspindel der Frässpindel 100 in entweder eine Drehbewegung des in eine Aufnahme des Werkzeugaggregats 10b aufgenommenen Bearbeitungswerkzeugs 200b (beispielsweise Fräser), oder in eine vertikale Verstellbewegung der Tastglocke 35 gestattet. Auch die anderen beiden alternativen Möglichkeiten zum Antrieb des Getriebemechanismus können für das Werkzeugaggregat 10b zur Anwendung kommen.

Die Tastglocke 35 umfasst ein Tastelement 36 (Tastring), welches das eingewechselte Bearbeitungswerkzeug 200b umgibt und eine Tastung gegenüber einem Werkstück ermöglicht. Das Tastelement 36 ist durch die Bewegung der Tastglocke 35 gegenüber dem Gehäuse 32 verschiebbar abgestützt. Somit ist es möglich, das Tastelement 36 beispielsweise bei einem Werkzeugwechsel translatorisch zu verstellen, und somit einen größeren Abschnitt des Bearbeitungswerkzeuges freizulegen. Auf diese Weise ist es möglich, die Rüstzeiten für unterschiedlich dimensionierte Bearbeitungswerkzeuge zu verkürzen. Ferner ist es nicht erforderlich, eine spezielle Tastglocke für ein bestimmtes Bearbeitungswerkzeug bereitzustellen.

Auch ist es möglich, die relative Verstellung zwischen dem Tastelement 36 und dem Bearbeitungswerkzeug 200b auf Grund einer Bearbeitung vorzunehmen. Bei der Verwendung von Satzwerkzeugen können somit mit einem Bearbeitungswerkzeug mehrere Profile eingestellt werden, ohne einen Werkzeugwechsel vorzunehmen.

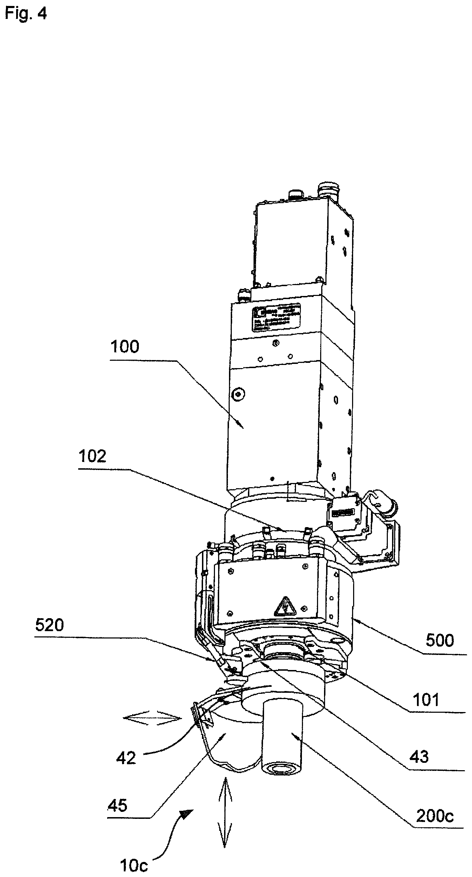

Fig. 4 zeigt eine vierte Ausführungsform der vorliegenden Erfindung, die sich im Wesentlichen durch das Werkzeugaggregat 10c von der in Fig. 1 dargestellten Ausführungsform unterscheidet.

Das Werkzeugaggregat 10c umfasst ein Gehäuse 42 sowie ein in in das Werkzeugaggregat 10c aufgenommenes Werkzeug 200c, insbesondere einen Fräser, sowie ein Späneleitblech 45, das am Gehäuse 42 des Werkzeugaggregats 10c angebracht ist. Ferner ist ein in eine Aufnahme der C-Achse 102 aufnehmbarer C-Achsbolzen 43 vorgesehen, sodass als eine Alternative zum Antrieb des Getriebemechanismus das Drehmoment der Aggregatachse über den Achsbolzen 43 auf das Werkzeugaggregat 10 übertragen werden kann.

Das Späneleitblech 45 ist in der vorliegenden Ausführungsform in zwei translatorischen Richtungen verstellbar, nämlich in einer im Wesentlichen vertikalen Richtung sowie in einer im Wesentlichen horizontalen Richtung. Auf diese Weise kann das Späneleitblech 45 auf die Werkzeuglänge und/oder den Werkzeugdurchmesser eingestellt werden. Dies erhöht die Flexibilität des Werkzeugaggregats 10c mit Blick auf verschiedene Werkzeuge, ohne bei einem Werkzeugwechsel manuelle Einstellungen durchführen zu müssen.

Die Verstellung des Späneleitblechs 45 kann als eine Möglichkeit dadurch erfolgen, dass das Werkzeugaggregat 10c über den C-Achsbolzen 43 ein Drehmoment der Aggregatachse aufnimmt. Ein nicht näher dargestellter Getriebemechanismus setzt das aufgenommene Drehmoment in eine translatorische Bewegung des Späneleitblechs 45 um. Auch anderen genannten Mechanismen zum Antrieb des Getriebemechanismus sind für die in Figur 4 dargestellte Ausführungsform möglich.

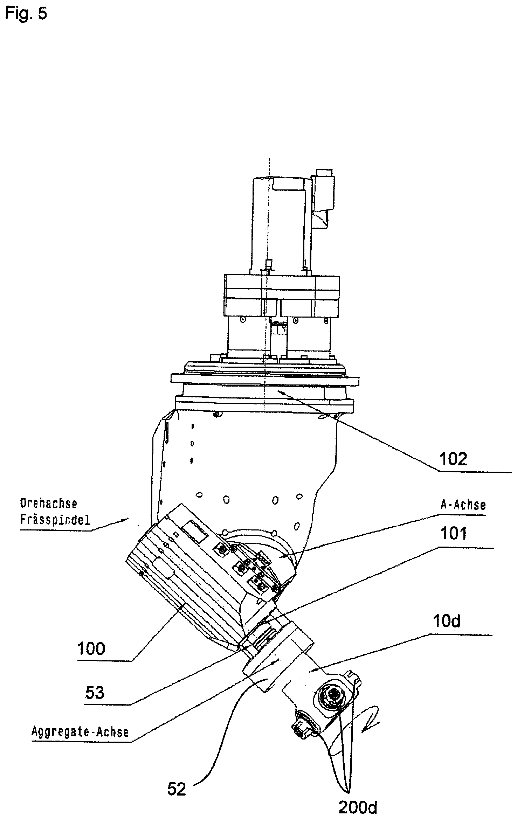

Fig. 5 zeigte eine fünfte Ausführungsform der vorliegenden Erfindung, die sich im Wesentlichen darin von den vorangegangenen Ausführungsformen unterscheidet, dass im Bereich des Werkzeugaggregats 10d, hier ein sogenannter 4-Spindler mit vier senkrecht zueinander ausgerichteten Werkzeugaufnahmen 200d, keine translatorische Bewegung durch den Getriebemechanismus bewirkt wird, sondern dass ein Abschnitt des Werkzeugaggregats 10d gegenüber seinem Gehäuse 52 um eine weitere Aggregateachse drehbar ist (insbesondere C2-Achse).

Die Ausrichtung des Werkzeugaggregats 10d zum Werkstück kann demnach über den zusätzlichen Freiheitsgrad durch Schwenken um die Aggregateachse erfolgen. Dabei können Bohrungen in einem beliebigen Winkel in ein Werkstück eingebracht werden.

Die Verstellung des Werkzeugaggregats 10d erfolgt über einen nicht näher dargestellten Getriebemechanismus, der über verschiedene zuvor genannte Systeme angetrieben werden kann.

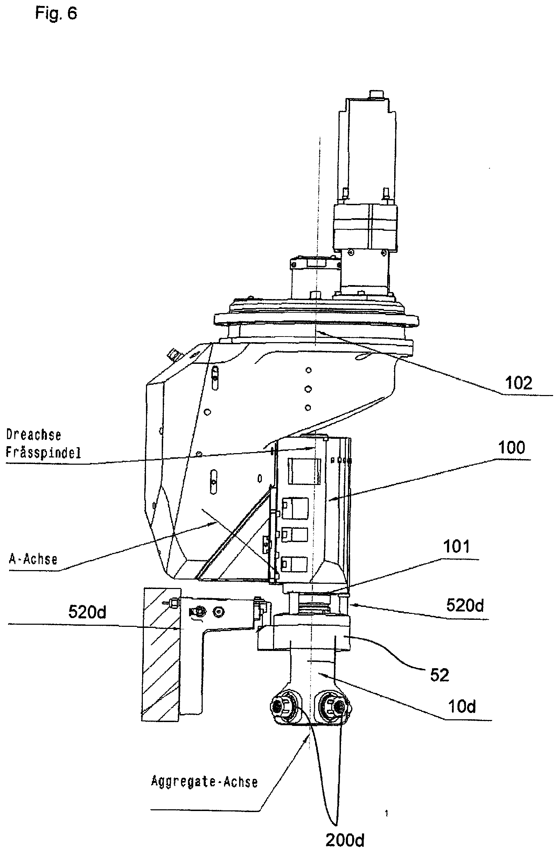

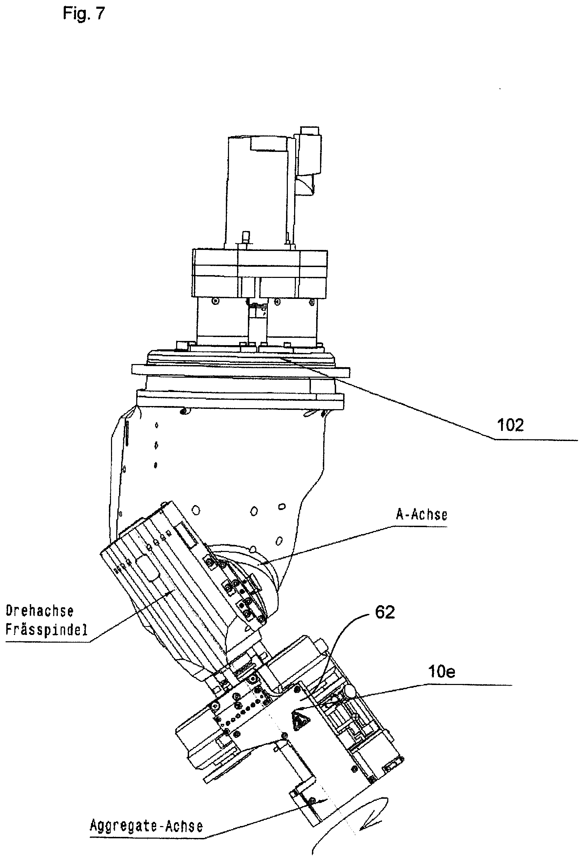

Eine mögliche Maßnahme zur Verstellung des Werkzeugaggregats 10d um die Aggregateachse ist in Fig. 7 der vorliegenden Anmeldung detaillierter dargestellt. Hierbei ist eine Arretierung 520d vorgesehen, die am Maschinengestell befestigt ist. Zur Verstellung des Werkzeugaggregats 10d wird dieses wie in Fig. 6 dargestellt ausgerichtet, sodass das Werkzeugaggregat 10d im Bereich der A-Achse einen Winkel 0° aufweist, also im Wesentlichen vertikal ausgerichtet ist. In diesem Zustand greift die Arretierung 520d am Werkzeugaggregat 10d ein, und das Werkzeugaggregat 10d kann über den C-Achsenantrieb und den C-Achsbolzen 53 um die Aggregateachse gedreht werden.

Wird die Drehbewegung des Werkzeugaggregats 10d über die HSK-Aufnahme oder über eine über das Elektronikmodul 500 (hier nicht dargestellt) bereitgestellte Energie bewirkt, kann die Ausrichtung des Werkzeugaggregats 10d zur A-Achse beliebig sein.

In der in Fig. 7 dargestellten Ausführungsform ist als Werkzeugaggregat 10e ein Verleimaggregat vorgesehen, das zum Aufbringen eines Kantenmaterials mittels einer Andrückwalze 200e an einer Schmalseite von Werkstücken eingerichtet ist. Wie die in Fig. 5 dargestellte Ausführungsform kann ein Gehäuseabschnitt des Werkzeugaggregats 10e mittels des C-Achsbolzens 63 gegenüber einem Gehäuse 62 des Werkzeugaggregats 10e um die Aggregateachse gedreht werden, sodass neue Bearbeitungsmöglichkeiten realisiert werden können. Insbesondere können Kanten schräg auf einem Werkstück aufgeklebt werden.

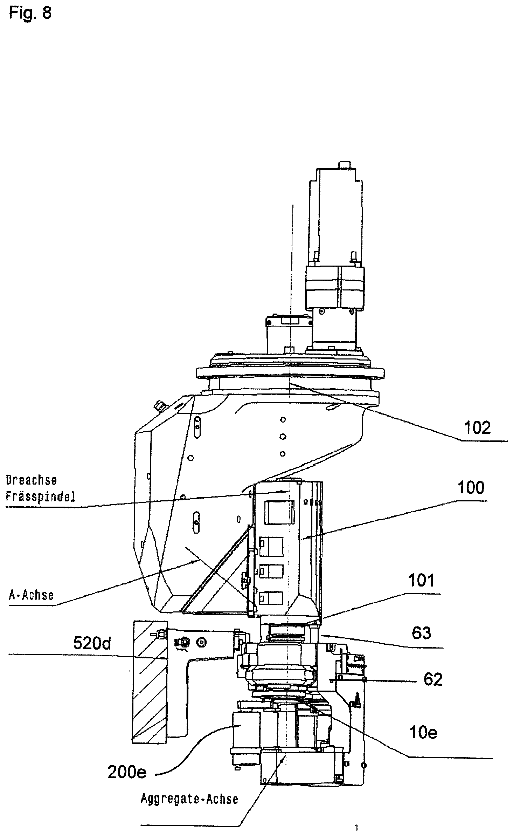

Fig. 8 zeigt eine Ansicht des in Fig. 7 dargestellten Werkzeugaggregats 10e, wenn dieses entsprechend dem Vorgehen in Fig. 7 mit der Arretierung 520d in Verbindung steht und um die Aggregateachse gedreht wird. Auch anderen genannten Mechanismen zum Antrieb des Getriebemechanismus sind für die in den Figuren 7 und 8 dargestellte Ausführungsform möglich.

## Patentansprüche

1. Einwechselbares Werkzeugaggregat (10, 10a-10c) mit einer Schnittstelle zum Einwechseln des Werkzeugaggregats (10, 20, 30) in eine Spindeleinheit (100) sowie einer Werkzeugaufnahme zum Aufnehmen eines Bearbeitungswerkzeugs (200),
wobei das Werkzeugaggregat (10, 10a-10c) einen Getriebemechanismus umfasst, um eine Drehbewegung in eine translatorische Verstellbewegung eines beweglichen Elements des Werkzeugaggregats, insbesondere eines Bearbeitungswerkzeugs (200), einer Aufnahme für ein Bearbeitungswerkzeug, eines Tastelements (25-27; 36), eines Schutzelements, insbesondere Späneleitblechs (45), oder einer Düse, zu übertragen
**dadurch gekennzeichnet, dass**
(a) der Getriebemechanismus durch eine Drehung des Werkzeugaggregats unter Verwendung einer Arretierung (520) um eine C-Achse der Spindeleinheit (100) angetrieben wird, wobei die Arretierung (520) zur Arretierung eines äußeren Abschnitts des Gehäuses (12) des Werkzeugaggregats (10, 10a-10c) bezüglich der Spindeleinheit (100) vorgesehen ist, oder
(b) dass der Getriebemechanismus eine Kupplung umfasst, die insbesondere mittels einer über einen C-Achsbolzen bereitgestellten Druckluft, elektromagnetisch oder motorisch betätigt wird, um die Drehbewegung einer Hauptspindel der Spindeleinheit (100) in die translatorische Bewegung des beweglichen Elements des Werkzeugaggregats zu übertragen.

2. Werkzeugaggregat (10, 10a-10c) gemäß einem der vorangegangenen Ansprüche, bei dem das Werkzeugaggregat mehrere Bearbeitungswerkzeuge (200) umfasst, die durch den Getriebemechanismus relativ zueinander verstellbar sind.

3. Werkzeugaggregat (10, 10a-10c) gemäß Anspruch 2, das eine Führungsschiene (14) aufweist, entlang derer die mehreren Bearbeitungswerkzeuge (200) bewegbar sind.

4. Werkzeugaggregat (10b) gemäß Anspruch 1, **dadurch gekennzeichnet, dass** das Werkzeugaggregat (30) eine Tastvorrichtung (35) umfasst, die das Bearbeitungswerkzeug (200) abschnittsweise umgibt und ein Tastelement (36) aufweist, das in einer Längsrichtung des Bearbeitungswerkzeugs (200) verstellbar ist.

5. Werkzeugaggregat (10a) gemäß Anspruch 1, **dadurch gekennzeichnet, dass** das Werkzeugaggregat (10a) ein horizontal verfahrbares Tastelement (25) und/oder zumindest ein vertikal verfahrbares Tastelement (26, 27) aufweist.

## Claims

1. Exchangeable tool unit (10, 10a-10c) having an interface for exchanging the tool unit (10, 20, 30) for a spindle unit (100) as well as a tool holder for receiving a machining tool (200),
wherein the tool unit (10, 10a-10c) comprises a gear mechanism for converting a rotational movement to a translational adjusting movement of a movable element of the tool unit, in particular a machining tool (200), a holder for a machining tool, a sensing element (25-27; 36), a protective element, in particular a chip deflector (45), or a nozzle,
**characterised in that**
(a) the gear mechanism is driven by a rotation of the tool unit, using a locking means (520), about a C-axle of the spindle unit (100), wherein the locking means (520) is provided for locking an outer section of the housing (12) of the tool unit (10, 10a-10c) relative to the spindle unit (100), or
(b) **in that** the gear mechanism comprises a coupling which is actuated in particular by means of compressed air provided via a C-axle pin, electromagnetically or by motor in order to convert the rotational movement of a main spindle of the spindle unit (100) to the translational movement of the movable element of the tool unit.

2. Tool unit (10, 10a-10c) according to any of the preceding claims, in which the tool unit comprises a plurality of machining tools (200) which are adjustable relative to each other by the gear mechanism.

3. Tool unit (10, 10a-10c) according to claim 2, which has a guide rail (14) along which the plurality of machining tools (200) are movable.

4. Tool unit (10b) according to claim 1, **characterised in that** the tool unit (30) comprises a sensing device (35) which surrounds the machining tool (200) in one section and has a sensing element (36) which is adjustable in a longitudinal direction of the machining tool (200).

5. Tool unit (10a) according to claim 1, **characterised in that** the tool unit (10a) has a horizontally movable sensing element (25) and/or at least one vertically movable sensing element (26, 27).

## Revendications

1. Unité d'outil interchangeable (10, 10a à 10c) avec une interface pour changer l'unité d'outil (10, 20, 30) dans une unité à broche (100) ainsi qu'avec un logement d'outil destiné à loger un outil d'usinage (200),
dans laquelle l'unité d'outil (10, 10a à 10c) comprend un mécanisme de transmission pour transformer un mouvement de rotation en un mouvement d'ajustement en translation d'un élément mobile de l'unité d'outil, en particulier d'un outil d'usinage (200), d'un logement destiné à un outil d'usinage, d'un élément palpeur (25 à 27 ; 36), d'un élément protecteur, en particulier d'une tôle de guidage de copeaux (45), ou d'une buse,
**caractérisée en ce que** :
(a) le mécanisme de transmission est entraîné par une rotation de l'unité d'outil en utilisant un dispositif d'arrêt (520) autour d'un axe C de l'unité à broche (100), le dispositif d'arrêt (520) étant prévu pour arrêter un tronçon extérieur du boîtier (12) de l'unité d'outil (10, 10a à 10c) par rapport à l'unité à broche (100), ou
(b) le mécanisme de transmission comprend un embrayage qui est actionné de façon électromagnétique ou motrice en particulier au moyen d'un air comprimé fourni par l'intermédiaire d'un boulon d'axe C dans le but de transformer le mouvement de rotation d'une broche principale de l'unité à broche (100) en mouvement de translation de l'élément mobile de l'unité d'outil.

2. Unité d'outil (10, 10a à 10c) selon l'une des revendications précédentes, dans laquelle l'unité d'outil comprend plusieurs outils d'usinage (200) qui sont ajustables les uns par rapport aux autres par le mécanisme de transmission.

3. Unité d'outil (10, 10a à 10c) selon la revendication 2, qui comporte un rail de guidage (14) le long duquel les outils d'usinage (200) peuvent être déplacés.

4. Unité d'outil (10b) selon la revendication 1, **caractérisée en ce que** l'unité d'outil (30) comprend un dispositif palpeur (35) qui entoure par endroits l'outil d'usinage (200) et qui comporte un élément palpeur (36) qui est ajustable dans une direction longitudinale de l'outil d'usinage (200).

5. Unité d'outil (10a) selon la revendication 1, **caractérisée en ce que** l'unité d'outil (10a) comporte un élément palpeur (25) déplaçable horizontalement et/ou au moins un élément palpeur (26, 27) déplaçable verticalement.
